## Europäisches Patentamt

## European Patent Office

## Office européen des brevets

(19)

(11) Veröffentlichungsnummer: **0 242 830**
**B1**

(12) **EUROPÄISCHE PATENTSCHRIFT**

(45) Veröffentlichungstag der Patentschrift:
**16.08.89**

(51) Int. Cl.⁴: **B65G 49/04**

(21) Anmeldenummer: **87105750.1**

(22) Anmeldetag: **17.04.87**

(54) **Transportanlage.**

(30) Priorität: **25.04.86 CH 1712/86**

(43) Veröffentlichungstag der Anmeldung:
**28.10.87 Patentblatt 87/44**

(45) Bekanntmachung des Hinweises auf die Patenterteilung:
**16.08.89 Patentblatt 89/33**

(84) Benannte Vertragsstaaten:
**CH DE FR GB IT LI NL SE**

(56) Entgegenhaltungen:
**DE-A- 1 556 171**

(73) Patentinhaber: **ROAG (AG), Dorfstrasse 8,
CH-8484 Weisslingen(CH)**

(72) Erfinder: **Suter, Hans René, In Hätzelwisen 16,
CH-8602 Wangen(CH)**

(74) Vertreter: **Blum, Rudolf Emil Ernst et al, c/o E. Blum &
Co Patentanwälte Vorderberg 11, CH-8044 Zürich(CH)**

**Beschreibung**

Die vorliegende Erfindung betrifft eine Transportanlage gemäss dem Oberbegriff des Patentanspruchs 1.

Bei der hier in Rede stehenden Transportanlage handelt es sich um eine Anlage für Reinigungs- und/oder Prozessanlagen, mit oder ohne Trocknungsanlagen.

Es sind Transportanlagen bekannt, bei denen eine Transporteinheit auf Schienen über und/oder unter der Anlage verfahrbar angeordnet ist und mit einer Hubvorrichtung versehen ist, um ein als Korb ausgebildetes mit zu reinigendem Gut füllbares Transportmittel zu einer Anzahl von Stationen zu fördern, bzw. in einzelne Stationen einzuführen.

Bei einem anderen System werden die auf einer Rollenbahn zugeführten Transportkörbe von einzelnen Hubbalkenvorrichtungen von Station zu Station befördert.

Derartige Transportanlagen haben die Nachteile, dass die Anlagen viel Raum benötigen, durch die Montage über den Stationen der Anforderung zur Aufstellung in Reinräumen nicht genügen und daher nur mit grossem Aufwand (Kammeraufteilung) zur Aufstellung in Reinräumen tauglich gemacht werden können und dass Transportmittel während der Förderung umgesetzt wird, wodurch die beim Behandeln von Feinoptik unerwünschten Schläge bzw. Stösse auftreten.

Ziel der Erfindung ist eine Transportanlage zu schaffen, die die erwähnten Nachteile nicht aufweist und sich durch einfachen Aufbau und Bedienung auszeichnet.

Dieses Ziel wird mit den kennzeichnenden Merkmalen des Patentanspruches 1 erreicht.

Die mit der Erfindung erreichbaren Vorteile sind im wesentlichen darin zu sehen, dass das Transportsystem als Teil in eine Fabrikationsanlage integriert und durch das Steuersystem der Fabrikationsanlage gesteuert werden kann, eine mit dem Transportsystem versehene Anlage ohne Einschränkung des Aufstellungsortes montiert werden kann und die Anlage eine höhere Produktionsleistung aufweist.

Im folgenden wird die Erfindung anhand der beiliegenden Zeichnungen näher erläutert.

Es zeigen:

Figur 1 eine Ansicht einer schematisch dargestellten Ausführungsform einer erfindungsgemässen Transportanlage,

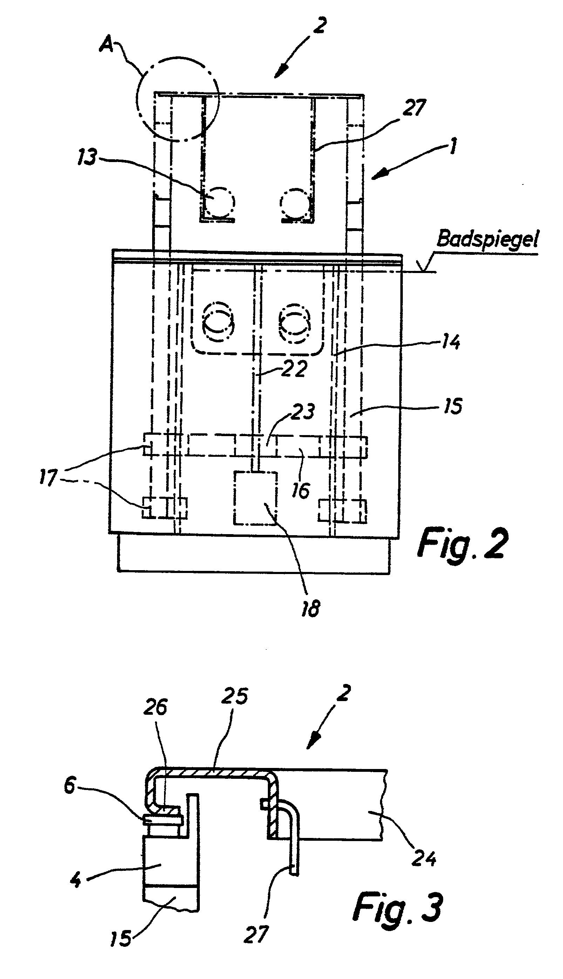

Figur 2 eine Seitenansicht von Figur 1,

Figur 3 eine im grösseren Massstab dargestellte Einzelheit "A" in Figur 2,

Figur 4 eine Seitenansicht einer anderen Ausführungsform der Transportanlage, und

Figur 5 eine im grösseren Massstab dargestellte Einzelheit "B" in Figur 4.

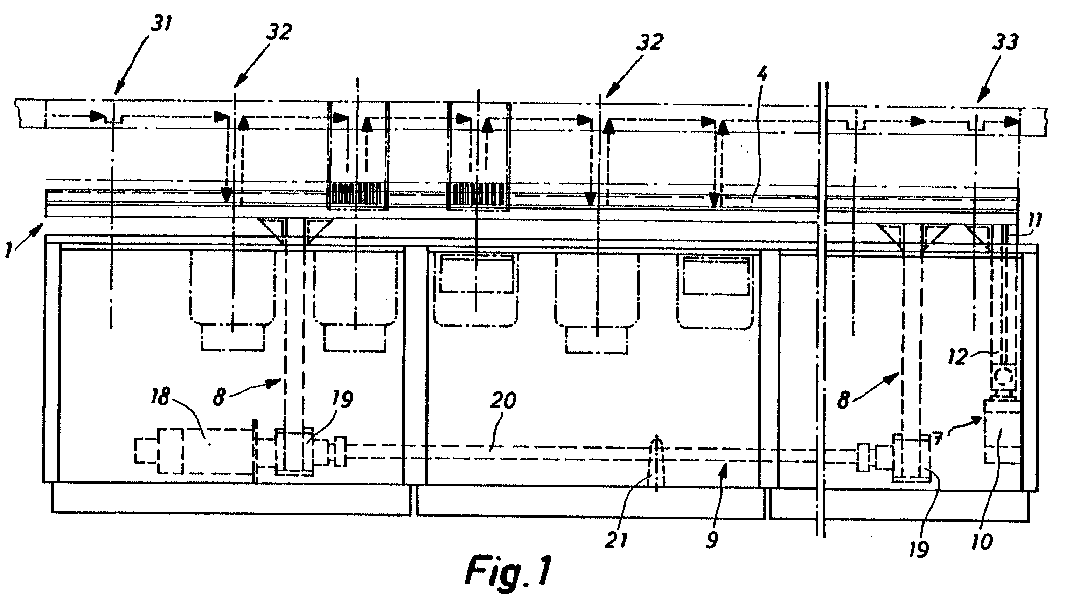

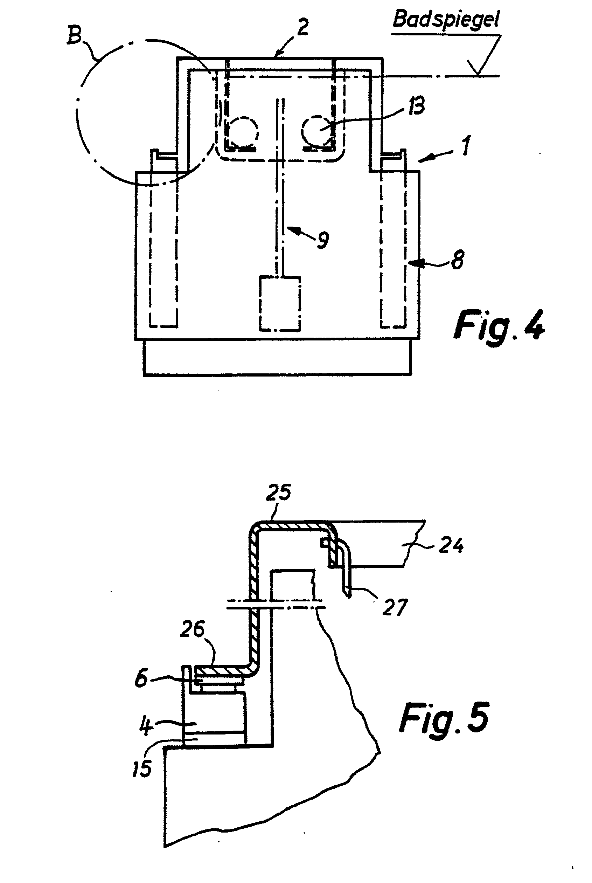

In den Figuren 1 und 5 ist die Transportanlage als Teil einer Prozessanlage zur Reinigung und Trocknung von Gegenständen dargestellt.

Die Transportanlage enthält ein Transportband 1 und ein Transportmittel 2. Das Transportband 1 weist zwei parallele Führungsschienen 4, die miteinander verbunden sind, zwei Endlosbänder 6, die von oben zugänglich auf den Führungsschienen 4 angeordnet sind, und eine Antriebsvorrichtung 7 für die Endlosbänder 6 auf. Es ist eine Hebevorrichtung (8,9) vorgesehen, um das Transportband 1 auf- und abzuverschieben.

Die Antriebsvorrichtung 7 für die Endlosbänder 6 enthält einen Antriebsmotor 10, eine mit dem Antriebsmotor verbundene Welle 11 und ein Getriebe (nicht dargestellt), das die Welle 11 mit den nicht dargestellten Treibrollen für die Endlosbänder 6 verbindet. Der Motor 10 ist über Stützen 12 an die Schienen 4 befestigt, so dass die Antriebsvorrichtung 7 zusammen mit dem Transportband 1 auf- und abbewegbar ist.

Der Hebemechanismus 8 enthält zwei Baugruppen, die im Abstand zueinander mit dem Transportband 1 verbunden sind. Jede Baugruppe enthält zwei Führungsstäbe 14, die am Gestell des Gehäuses befestigt sind, zwei Träger 15, die an einem Ende jeweils an einer Führungsschiene 4 befestigt sind, einen Tragbalken 16, der mit den Trägern 15 fest verbunden ist und an den Führungsstäben 14 geführt ist und zwei Führungsvorrichtungen 17, die an den Trägern 15 befestigt sind, um eine Zweipunktführung für jeden Träger zu schaffen.

Die Antriebsvorrichtung 9 für den Hebemechanismus umfasst einen Getriebemotor 18, zwei Winkelgetriebe 19, eine Welle 20, die den Motor 18 mit den Winkelgetrieben 19 verbindet, einen Lagerbock 21 für die Welle 20, zwei Gewindespindeln 22, die jeweils an einem Ende an das Winkelgetriebe gekoppelt und am anderen Ende im Gestell des Gehäuses gelagert sind und zwei Muttern 23, die am Tragbalken 16 befestigt ist und mit der Spindel 22 zusammenwirkt.

Neben den vorstehend beschriebenen Ausführungsformen der Antriebsvorrichtung 7 und der Hebevorrichtung 8,9 sind auch andere Konstruktionen denkbar. So kann die Gewindespindel durch eine Zahnstange ersetzt werden, die über einen Motor auf- und abverschoben wird. Anstelle der Antriebsvorrichtung 7 kann für jedes Endlosband 6 ein Einzelantrieb vorgesehen werden. Bei einer weiteren Ausführungsform können der Hebemechanismus 8 und das Endlosband 6 durch einen einzigen Motor angetrieben werden.

Das Transportmittel 2 für das Gut 13 enthält einen rahmenförmigen Teil 24 mit seitlich abstehendem Rand 25 und Auflageabschnitten 26, die auf die Endlosbänder 6 auflegbar sind, und Halter 27 für das Gut 13.

An den Führungsschienen 4 sind nicht dargestellte, den jeweiligen Stationen zugeordnete Schaltelemente angeordnet, die durch den rahmenförmigen Teil 24 betätigt werden. Diese Schaltelemente geben bei Betätigung ein Signal an eine nicht dargestellte Steuereinrichtung ab, um die Transportanlage zu steuern.

Die in den Figuren 4 und 5 dargestellte Ausführungsform der Transportanlage unterscheidet sich gegenüber der eingangs beschriebenen Anlage durch die tiefer angeordneten Endlosbänder 6 und das konstruktiv daran angepasste Transportmittel 2.

Die Prozessanlage hat eine Beladestation 31, in der die Transportmittel 2 auf die Endlosbänder 6 auflegbar ist, mehrere Behandlungsstationen 32, die in der Regel ein Bad aufweisen, und eine Entladestation 33, in der die Transportmittel 2 abgenommen werden.

Nachfolgend wird eine Funktion der Transportanlage beschrieben.

Zur Aufnahme des Transportmittels 2 in der Beladestation 31 wird das Transportband 1 in die untere Stellung oder Arbeitsstellung abgesenkt. Danach wird das Transportband 1 in die obere Stellung oder Transportstellung angehoben. Erreicht das Transportmittel 2 die erste Behandlungsstation 32, wird durch das entsprechende Schaltelement ein Signal an die Steuereinrichtung abgegeben und das Transportband 2 abgesenkt, so dass das Gut 13 in die erste Behandlungsstation 32 eingebracht wird. Neben des vorstehend erwähnten Verschiebung des Transportbandes 2 in die Arbeits- bzw. Transportstellung kann dem Transportband zusätzlich eine Auf- und Abbewegung, die Warenbewegung erteilt werden. In der Entladestation 33 kann das Transportmittel 2 durch Absenken des Transportbandes 1 abgesetzt oder direkt an ein weiteres Transportband abgegeben werden.

**Patentansprüche**

1. Transportsystem zur automatischen Bedienung einer Mehrzahl von Stationen, die hintereinanderliegend angeordnet sind, gekennzeichnet durch mindestens ein Transportband (1) mit einer Antriebseinrichtung (7), das bezüglich der Stationen (31, 32, 33) seitlich versetzt und auf einer vorbestimmten Höhe angeordnet ist, eine Hebevorrichtung (8,9) mit einem Hebemechanismus (8) und einer Antriebseinrichtung (9), um das Transportband (1) selektiv bezüglich den Stationen auf- und abzuverschieben, mindestens ein Transportmittel (2), das ausserhalb der Stationen mit dem Transportband (1) in und ausser Eingriff bringbar und über die Stationen verfahrbar ist, um das Gut zu den Stationen zu fördern und in die Stationen abzusenken, und eine Steuereinrichtung, um das Transportband (1) in Abhängigkeit von Durchlaufstrecke und Gut des Transportmittels (2) zu steuern.

2. System nach Anspruch 1, dadurch gekennzeichnet, dass das Transportband (1) zwei Schienen (4), die jeweils mit dem Hebemechanismus (8) verbunden sind, zwei Endlosbänder (6), die auf den Schienen (4) bezüglich den Stationen (15,16,17) einander gegenüberliegend und von oben frei zugänglich angeordnet sind, um das Transportmittel (2) aufzunehmen, und Steuerorgane aufweist, die bei Betätigung durch das Transportmittel (2) Steuersignale an die Steuereinrichtung abgeben, um die Endlosbänder (6) nach Durchlauf einer vorbestimmten Wegstrecke anzuhalten und bezüglich den Stationen anzuheben bzw. abzusenken.

3. System nach Anspruch 1, dadurch gekennzeichnet, dass die Antriebseinrichtung (7) für das Transportband (1) und die Antriebseinrichtung (9) für die Hebevorrichtung als eine Einheit ausgebildet sind.

4. System nach Anspruch 1, dadurch gekennzeichnet, dass das Transportmittel (2) einen rahmenförmigen Teil (24) mit seitlich abstehenden Abschnitten (25, 26), die auf die Endlosbänder (6) auflegbar sind, und Halter (27) für das Gut (13) aufweist.

5. Anlage mit einem Transportsystem nach Anspruch 1, dadurch gekennzeichnet, dass mindestens eine Station ein Bad (32) ist und dass das Transportband (1) unter- bzw. oberhalb des Badspiegels angeordnet ist.

6. Anlage nach Anspruch 5 mit einem Gehäuse, dadurch gekennzeichnet, dass die Antriebseinrichtungen für das Transportband (1) und den Hebemechanismus (8) innerhalb des Gehäuses angeordnet sind.

7. Anlage nach Anspruch 5, dadurch gekennzeichnet, dass mehrere Transportbänder (1) vorgesehen sind, die einzelnen Bädern oder Gruppen von Bädern zugeordnet sind.

**Claims**

1. Conveying system for automatically servicing of a plurality of consecutive stations, characterized by at least one conveyor (1) having a drive unit (7), which conveyor is disposed laterally offset relative to the stations (31, 32, 33) and at a predetermined height, a lifting device (8, 9) having a lifting mechanism (8) and a drive unit (9) for selectively moving up and down the conveyor (1) regarding the stations, at least a transporting means (2) that can be connected to and disconnected from the conveyor (1) outside of the stations, and which is transportable above the stations to convey the articles to the stations and to sink them therein, and by a control unit for controlling the conveyor (1) in response to the distance and article of the transporting means (2).

2. Conveying system of claim 1, wherein the conveyor (1) includes two rails (4), each connected to the lifting mechanism (8), two endless belts (6) disposed opposite to each other and accessible from above for receiving the transporting means (2), and control means transmit control signals to the control unit when activated by the transporting means (2) for stopping the endless belts (6) and moving same up and down, respectively, regarding the stations after travelling a predetermined distance.

3. Conveying system of claim 1, wherein the drive unit (7) for the conveyor (1) and the drive unit (9) for the lifting device define a common unit.

4. Conveying system of claim 1, wherein the transporting means (2) includes a frame-like part (24) having laterally projecting sections (25, 26) for being disposed on the endless belts (6) and including a support (27) for the articles (13).

5. Transporting plant having a transport apparatus according to claim 1, characterized in that at least one station is a bath (32) and the conveyor (1) is disposed below and above, respectively, of the level of the bath.

6. Transporting plant of claim 5, which plant is having a housing, characterized in that the drive units for the conveyor (1) and the drive unit for the lifting mechanism (8) are disposed within the housing.

7. Transporting plant of claim 5, wherein several conveyors (1) are provided, which conveyors are associated to single baths or groups of baths.

**Revendications**

1. Système de transport pour le service d'une pluralité de stations qui sont disposées les unes derrière les autres, caractérisé par au moins une bande transporteuse (1) avec un dispositif d'entraînement (7), qui est disposée décalée latéralement par rapport aux stations (31, 32, 33) et à une hauteur prédéterminée, un dispositif élévateur (8, 9) avec un mécanisme élévateur (8) et un dispositif d'éntraînement (9) pour soulever et abaisser sélectivement la bande transporteuse (1) par rapport aux stations, au moins un moyen de transport (2) qui peut être amené en prise et hors de prise avec la bande transporteuse (1) en dehors des stations et peut être déplacé au-dessus des stations pour amener la matière aux stations et l'abaisser dans les stations, et un dispositif de commande pour commander la bande transporteuse (1) en fonction de l'étendue de trajet et de la matière du moyen de transport (2).

2. Système selon la revendication 1, caractérisé en ce que la bande transporteuse (1) présente deux rails (4) qui sont chacun reliés au mécanisme élévateur (8), deux bandes sans fin (6) qui sont disposées opposées l'une à l'autre par rapport aux stations (15, 16, 17) et sont accessibles librement par au-dessus pour recevoir le moyen de transport (2), et des organes de commande qui, lors de l'actionnement par le moyen de transport (2), délivrent des signaux de commande au dispositif de commande pour arrêter les bandes sans fin (6) après passage d'un trajet prédéterminé et les soulever ou les abaisser par rapport aux stations.

3. Système selon la revendication 1, caractérisé en ce que le dispositif d'entraînement (7) pour la bande transporteuse (1) et le dispositif d'entraînement (9) pour le dispositif élévateur sont construits sous forme d'une unité.

4. Système selon la revendication 1, caractérisé en ce que le moyen de transport (2) présente une portion (24) en forme de cadre avec des sections (25, 26) qui peuvent être posées sur les bandes sans fin (6), ainsi qu'un support (27) pour la matière (13).

5. Installation avec un système de transport selon la revendication 1, caractérisée en ce qu'au moins une station est constituée par un bain (32) et que la bande transporteuse (1) est disposée au-dessus ou au-dessous du niveau du bain.

6. Installation selon la revendication 5, avec un carter, caractérisée en ce que les dispositifs d'entraînement pour la bande transporteuse (1) et le mécanisme élévateur sont disposés à l'intérieur du carter.

7. Installation selon la revendication 5, caractérisée en ce qu'on prévoit plusieurs bandes transporteuses (1) qui sont adjointes à des bains individuels ou à des groupes de bains.

*Fig.1*

EP 0 242 830 B1

*Fig. 2*

Badspiegel

*Fig. 3*

EP 0 242 830 B1

Badspiegel

B

2

13

1

9

8

*Fig.4*

25

24

27

26

6

4

15

*Fig.5*